# EUROPÄISCHE PATENTSCHRIFT

(11) **EP 0 659 635 B1**
(45) Veröffentlichungstag und Bekanntmachung des Hinweises auf die Patenterteilung: **16.09.1998**
(21) Anmeldenummer: 94119392.2
(22) Anmeldetag: 08.12.1994
(51) Int. Cl.: B62K 27/02

(54) **Beiwagen-Motorrad**
Sidecar-motorbike
Side-car-motocyclette

(30) Priorität: 21.12.1993 CH 3807/93
(43) Veröffentlichungstag der Anmeldung: 28.06.1995
(73) Patentinhaber: Aregger, Kurt, CH-6020 Emmenbrücke (CH)
(72) Erfinder: Aregger, Kurt, CH-6020 Emmenbrücke (CH)
(74) Vertreter: Kemény AG Patentanwaltbüro

(56) Entgegenhaltungen:
- EP-A- 0 488 375
- FR-A- 2 703 973
- GB-A- 11 707
- US-A- 4 690 235

## Beschreibung

Die Erfindung bezieht sich auf ein Beiwagen-Motorrad, nach dem Oberbegriff des Anspruch 1.

Bei Beiwagen-Motorrädern kommt der Kraftaufnahme durch die Vorderradaufhängung eine wesentliche Bedeutung zu, wobei es einerseits um relativ leichtes und präzises Lenken geht, und auch das Tauchen unter bestimmten Fahrbedingungen vermieden werden soll; der Fahrkomfort soll dabei nicht unzulässig gemindert werden.

Es ist daher schon auf maningfache Weise versucht worden, die Vorderradaufhängung den Erfordernissen des Beiwagen-Motorrads anzupassen.

Bei den in jüngster Zeit vermehrt anzutreffenden Konstruktionen, bei denen der Motor-Getriebeblock ein wesentlicher tragender Teil des Motorrads ist, können beim Anbringen eines Beiwagens besondere Schwierigkeiten auftreten.

Der Erfindung liegt die Aufgabe zugrunde, ein Beiwagenmotorrad zu schaffen, welches die bisherigen Nachteile nicht aufweist.

Zur Lösung dieser Aufgabe wird das im Anspruch 1 gekennzeichnete Beiwagen-Motorrad vorgeschlagen.

Der zum Lenken seitlich schwenkbare Radträger ist also einerseits, in an sich bekannter Weise, in seinem oberen Bereich mittels eines Längslenkers höhenbeweglich am Motorradrahmen angelenkt, und andererseits (gemäss Kennzeichnung) in seinem unteren Bereich mittels eines Querlenkers höhenbeweglich an einem mit dem Motorrad und mit dem Beiwagen verbundenen Rahmenträger angelenkt.

Während der Längslenker in an sich bekannter Weise wirkt und beispielsweise der Federung und/oder Dämpfung als Stützpunkt dienen kann, nimmt der Querlenker nahe der Radachse und vorzugsweise darunter angreifend die Querkräfte effizient auf.

Es versteht sich dabei, dass der Motor- bzw. Motor-Getriebe-Block des Motorrads auch als Motorradrahmen angesprochen wird, wenn er ganz oder teilweise eine solche Funktion hat.

Der Querlenker ist vorzugsweise als Dreiecklenker ausgebildet, wobei er mit kugelgelenkartig ausgebildeten Gelenken am Rahmenträger und am Radträger angelenkt ist. Das erlaubt bei exakter Radführung eine ausreichende Beweglichkeit, ohne dass Verspannungen auftreten.

Der Rahmenträger ist vorzugsweise als Verbindungsglied des Beiwagens und des Motorrads ausgebildet, wobei er als ein Längsholm des Beiwagenrahmens ausgebildet sein kann. Dadurch kann bei grosser Stabilität der Stützfunktion für das Vorderrad Gewicht gespart und der Schwerpunkt günstig angeordnet werden.

Dabei ist es vorteilhaft, wenn der besagte Rahmenträger sich längs nach vorn erstreckt, so dass der eine Schenkel des Dreiecklenkers sich möglichst direkt seitlich nahe an den Radmittelpunkt erstrecken kann. Man gewinnt auch dadurch Stabilität und gute Radführung

Vorzugsweise ist der Radträger oberhalb seines Längsträger-Lagers über eine Teleskopführung mit dem Lenker verbunden, wie dies beispielsweise bei Teleskopgabeln bekannt ist.

Die Erfindung wird nachstehend beispielsweise anhand der rein schematischen Zeichnung besprochen.

Es zeigen:
- Fig. 1: eine Seitenansicht von der Beiwagenseite der Vorderradaufhängung, mit angedeutetem Hauptträger, und
- Fig. 2: eine Draufsicht auf Teile der Vorderradaufhängung.

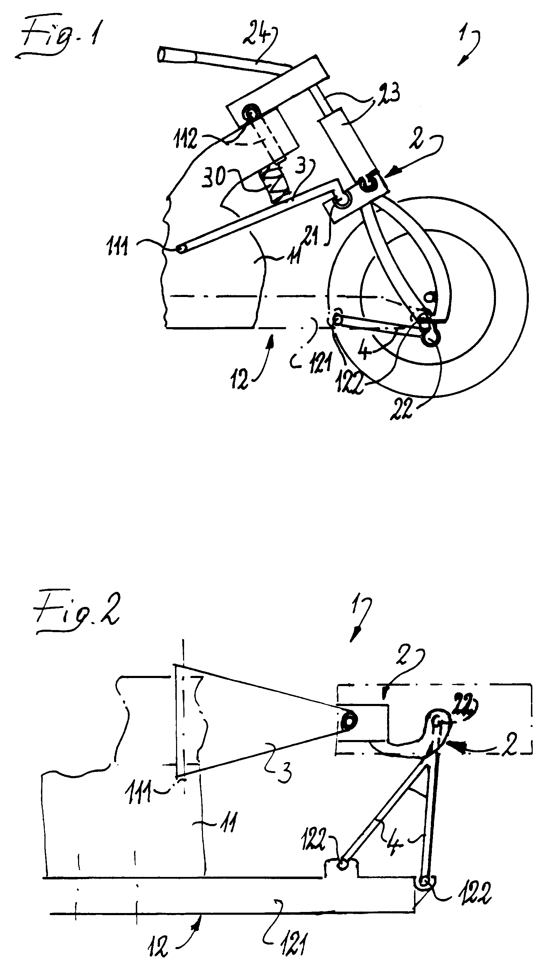

In der Zeichnung bedeuten:
- 1: Beiwagen-Motorrad.
- 11: Motorradrahmen.
- 111: Anlenkpunkte für Längslenker am Motorradrahmen.
- 112: Schwenklager für Radträger am Motorradrahmen.
- 12: Beiwagenrahmen.
- 121: Rahmenträger des Beiwagenrahmens.
- 122: Anlenkpunkte für Querlenker am Rahmenträger.
- 2: Radträger vorne.
- 21: Anlenkpunkt für Längsschwinge am Radträger.
- 22: Anlenkpunkt für Querlenker am Radträger.
- 23: Teleskopführung des Radträgers, mit Federbeinen.
- 24: Lenker.
- 3: Längslenker.
- 30: Feder-Dämpfungs-Element zwischen Längslenker und Motorradrahmen.
- 4: Querlenker.

Das Beiwagen-Motorrad 1 hat einen Motorradrahmen 11 (vor allem aus dem Motorblock bestehend, an welchem man die Anlenkpunkte 111 für den Längslenker 3 und das Schwenklager 112 für den Radträger erkennt.

Am Motorradrahmen 1 ist der Rahmenträger 121 des im übrigen nur durch den Pfeil 12 angedeuteten Beiwagenrahmens 12 angeschraubt. Dieser Rahmenträger 121 ragt nach vorne bis in die Nähe der Mitte des (nicht bezeichneten) Vorderrades.

Am Rahmenträger 121 sind die kugegelenkartigen Anlenkpunkte 122 des dreieckförmigen Querträgers 4, welcher am Anlenkpunkt 22 mit den Radträger 2 kugelgelenkartig verbunden ist.

Der am Motorradrahmen 11 bei 111 angelenkte Längslenker 3 ist mittels Anlenkpunkt 21 kugelgelenkartig mit dem Radträger 2 verbunden.

Bei seinen Auf-und-Ab-Bewegungen schwingt also der Radträger um den Längslenker und um den Querlenker, während er oben in der Teleskopführung 23 (die als Federbein ausgebildet ist) geführt ist. Die Teleskopführung 23 ist ihrerseits mit dem Lenker 24 des Motorrades verbunden und samt Radträger um das Schwenklager 112 beim Lenken einschlagbar.

Ein zwischen Motorradrahmen und Längslenker wirkendes Feder-Dämpfer-Paket 30 besorgt einen Teil der Federung samt Dämpfung.

Der Querlenker stützt sich am Rahmenträger 121 und somit am Motorradrahmen und am Beiwagenrahmen ab und übernimmt alle auf das Vorderrad wirkenden Seitenkräfte. Er kann auch Längskräfte aufnehmen.

Dadurch ist eine sehr stabile Konstruktion gegeben, welche sich fahrtechnisch günstig auswirkt und sich auch auf Motorräder anwenden lässt, deren Rahmen hauptsächlich oder ganz vom Motor- bzw. Motor-Getriebe-Block gebildet wird.

## Patentansprüche

1. Beiwagen-Motorrad (1), bei welchem der Motorradrahmen (11) mit dem Beiwagenrahmen (12) stabil verbunden ist, wobei ein zum Lenken seitlich schwenkbarer, Radträger (2) vorgesehen ist, welcher in seinem oberen Bereich mittels eines Längslenkers (3) höhenbeweglich am Motorradrahmen (11) angelenkt ist,
dadurch gekennzeichnet,
dass der Radträger (2) in seinem unteren Bereich mittels eines Querlenkers (4) höhenbeweglich an einem mit dem Motorradrahmen (11) und mit dem Beiwagenrahmen (12) verbundenen Rahmenträger (121) angelenkt ist.

2. Beiwagen-Motorrad nach Anspruch 1, dadurch gekennzeichnet, dass der Querlenker (4) als Dreiecklenker ausgebildet ist.

3. Beiwagen-Motorrad nach Anspruch 2, dadurch gekennzeichnet, dass als Dreiecklenker ausgebildete Querlenker (4) mit kugelgelenkartig ausgebildeten Gelenken (122; 22) am Rahmenträger (121) und am Radträger (2) angelenkt ist.

4. Beiwagen-Motorrad nach einem der Ansprüche 1 bis 3, dadurch gekennzeichnet, dass der Rahmenträger (121) als Verbindungsglied des Beiwagenrahmens (12) und des Motorradrahmens (11) ausgebildet ist.

5. Beiwagen-Motorrad nach Anspruch 4, dadurch gekennzeichnet, dass sich der Rahmenträger (121) längs nach vorn erstreckt.

6. Beiwagen-Motorrad nach einem der Ansprüche 1 bis 5, dadurch gekennzeichnet, dass der Radträger (2) oberhalb seines Längsträger-Lagers (21) über eine Teleskopführung (23) mit dem Lenker (24) verbunden ist.

## Claims

1. Sidecar-motorbike (1) with the motorbike frame (11) connected firmly with the sidecar frame (12) and provided with a laterally swivelling wheel support (2) for steering purpose which on its upper part is hinged movable in altitude to the motorbike frame (11) by means of a longitudinal guide rod (3), characterized in that the wheel support (2) is hinged on its lower part by means of a cross guide rod (4) to a frame support (121), which is connected to the motorbike frame (11) and the sidecar frame (12).

2. Sidecar-motorbike according to claim 1, characterized in that the cross guide rod (4) is constructed as a triangular guide rod.

3. Sidecar-motorbike according to claim 2, characterized in that triangular shaped cross guide rods (4) are hinged by means of ball-and-socket shaped joints (122; 22) to the frame support (121) and wheel support (2).

4. Sidecar-motorbike according to one of claims 1 to 3, characterized in that the frame support (121) is constructed as a connecting member between the sidecar frame (12) and the motorbike frame (11).

5. Sidecar-motorbike according to claim 4, characterized in that the frame support (121) is projecting longitudinally to the front.

6. Sidecar-motorbike according to one of claims 1 to 5, characterized in that the wheel support (2) is connected above his longitudinal guide rod bearing (21) by means of a telescopic guidance (23) to the control lever (24).

## Revendications

1. Side-car-motocyclette (1) dont le cadre (11) de la motocyclette est attaché de manière stable avec le cadre (12) du side-car, un support de roue (2) pivotable latéralement pour le guidage étant prévue, lequel est articulé dans sa partie supérieure ä l'aide d'un bras oscillant longitudinal (3) verticalement déplaçable sur le cadre (11) de la motocyclette, caractérisée en ce que le support de roue (2) est articulé dans sa partie inférieure à l'aide d'un bras oscillant transversal (4) verticalement déplaçable sur un support cadre (121), ce dernier étant raccordé avec le cadre (11) de la motocyclette et le cadre (12) du side-car.

2. Side-car-motocyclette selon la revendications 1, caractérisé en ce que le bras oscillant transversal (4) est construit comme levier triangulaire.

3. Side-car-motocyclette selon la revendication 2, caractérisé en ce que le bras oscillant transversal (4) sous forme d'un levier triangulaire est articulé à l'aide de joints d'accouplement (122;22) sous forme de joints à bille sur le support cadre (121) et avec le support de roue (2).

4. Side-car-motocyclette selon une des revendications 1 à 3, caractérisé en ce que le support cadre (121) est construit comme membre de raccord entre le cadre (12) du side-car et le cadre (11) de la motocyclette.

5. Side-car-motocyclette selon la revendications 4, caractérisé en ce que le support cadre (121) s'étend longitudinalement vers l'avant.

6. Side-car-motocyclette selon une des revendications 1 à 5, caractérisé en ce que le support de roue (2) est attaché au-dessus de son palier (21) du bras oscillant longitudinal par l'intermédiaire d'un guidage télescopique (23) contre le guidon (24).
